# EUROPEAN PATENT APPLICATION

(11) **EP 1 816 770 A2**
(43) Date of publication of application: **08.08.2007**
(21) Application number: 07290057.4
(22) Date of filing: 16.01.2007
(51) Int. Cl.: H04H 9/00

(54) **Broadcast receiver, data structure and method for providing diagnostic information**

(30) Priority: 01.02.2006 KR 20060009784
(71) Applicant: LG Electronics Inc., Youngdungpo-Gu Seoul (KR)
(72) Inventor: Cha, Sang Hoon, Seodaemun-gu, Seoul 120-830 (KR); Park, Tae Jin, B-302, Gungjeon Villa, Seongnam-si, Gyeonggi-do 461-824 (KR); Yun, Chang Sik, Gunpo-si, Gyeonggi-do, 435-010 (KR)
(74) Representative: Loisel, Bertrand

(57) **Abstract**

A host includes a controller configured to receive a request external to the host, wherein the request is for diagnostic information associated with memory allocated for an application. The controller is further configured to collect the requested diagnostic information.

## Description

This application claims the benefit of the Korean Patent Application No. 10-2006-0009784, filed on February 01, 2006, which is hereby incorporated by reference as if fully set forth herein.

### BACKGROUND

### Field of the Disclosure

The present disclosure relates to content broadcasting technology, and more particularly, to a broadcast receiver, data structure and method for providing diagnostic information.

### Background

Generally, a content broadcast system may include a broadcasting station transmitting contents through a wired (e.g., telephone or cable) or wireless (e.g., cellular or satellite) network and at least one host, such as a broadcast receiver, that receives the contents. The broadcast receiver may include a communication interface. Where the broadcast receiver does not have a communication interface, a communication card may be used by the broadcast receiver in order to interface with the broadcasting station.

In the case of cable broadcasting, a cable broadcasting station may be a system operator (SO) headend or a multiple system operator (MSO) head end. The SO may be a unified wire broadcast provider (i.e., local cable TV broadcast provider) and the MSO may be several SOs grouped together.

A cable broadcast receiver may be a digital built-in TV, a digital ready TV, etc. The cable broadcast receiver may employ an open cable system and may use a cablecard or a point of deployment (POD) module that may include a conditional access (CA) system. Alternatively, the cable broadcast receiver may have a built-in module that is a functional equivalent of the cablecard. In this instance, the cable broadcast receiver may receive a CA system, in a form of a software, that is downloadable from the SO or MSO and stored in a memory of the cable broadcast receiver. The downloadable software is usually referred to as download conditional access system (DCAS). As such, the cable broadcast receiver may have a configuration that may or may not require a separate cablecard.

Where a cablecard is required, the cablecard may use a personal computer memory card international association (PCMCIA) standard in order to interface with the cable broadcast receiver. The cablecard may be inserted in a slot provided at the cable broadcast receiver.

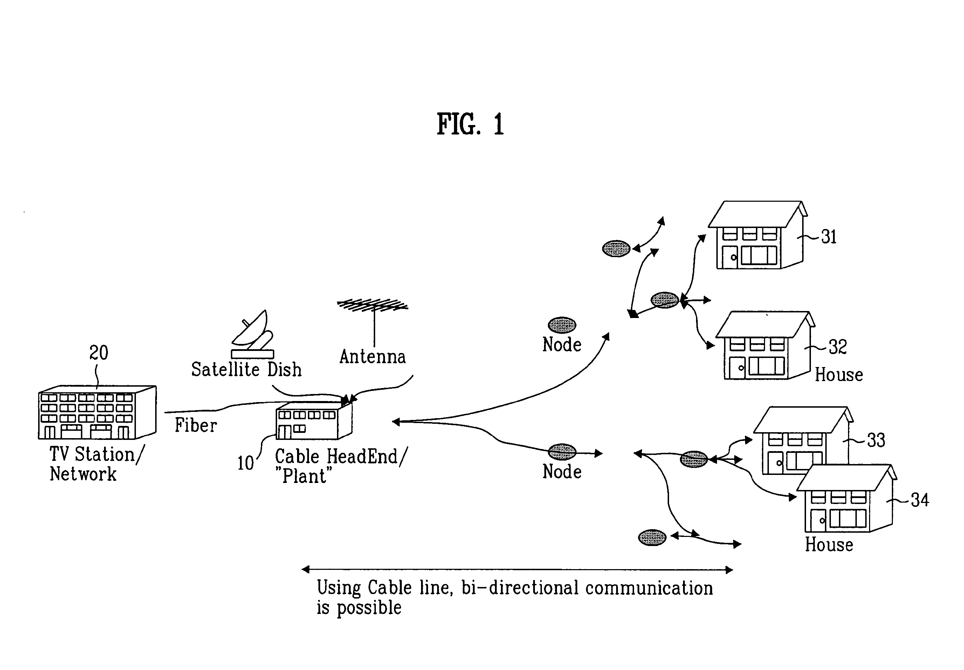

FIG. 1 is an exemplary diagram illustrating a cable broadcast network. Referring to FIG. 1, a cable headend or plant may receive cable broadcast signals via various communication networks from, for example, a television broadcasting station. The cable headend may deliver cable broadcast to a cable broadcast receiver, which may include a cablecard, via a network including nodes.

The cable broadcast receiver may communicate bi-directionally with the cable head end. In this case, the transmission/reception of data is achieved via a cable network capable of transferring data bi-directionally.

The cable broadcast receiver may be connected to various devices, such as a digital video disc (DVD) player, a digicam, a set-top box and the like. As services provided by the cable headend increase, the broadcast receiver may experience shortage of memory required for implementing the services.

### SUMMARY

Accordingly, the present disclosure is directed to broadcast receivers, data structures and methods for providing diagnostic information that substantially obviate one or more problems described above.

For example, the disclosure may disclose broadcast receivers and methods for providing diagnostic information, by which memory status information of a host may be forwarded to a head end.

The disclosure may disclosure a diagnostic information data structure, by which diagnostic information for a memory status of a broadcast receiver may be transmitted/received.

Advantages, objects, and features of the invention in part may become apparent in the description which follows and in part may become apparent to those having ordinary skill in the art upon examination of the following or may be learned from practice of the invention. The objectives and other advantages of the various embodiments of the invention may be realized and attained by the structures and processes described in the written description, in the claims, and in the appended drawings.

To achieve these objects and other advantages and in accordance with the purpose of the invention, as embodied and broadly described herein, a host includes a host controller configured to receive a request external to the host, wherein the request is for diagnostic information associated with memory allocated for an application. The host controller is further configured to collect the requested diagnostic information.

In another aspect, a communication device is configured to communicate with a host, the communication device includes a controller configured to receive a request external to the communication device, wherein the request is for diagnostic information associated with memory allocated for an application. The controller is further configured to set a value corresponding to the requested diagnostic information and to request the diagnostic information from the host using the set value.

In another aspect, a method includes receiving a request external to a host, wherein the request is for diagnostic information associated with memory allocated for an application; collecting the requested diagnostic information in accordance with the request; and forwarding the collected diagnostic information.

In yet another aspect, a method includes requesting diagnostic information associated with memory allocated for an application; receiving the diagnostic information in accordance with the request; and performing at least one of forwarding the diagnostic information and causing the diagnostic information to be displayed.

In a further aspect, a data structure includes information defining a size of memory allocated for an application, and information defining a size of available memory.

It is to be understood that both the foregoing general description and the following detailed description are exemplary and explanatory and should not be construed as limiting the scope of the claims.

### BRIEF DESCRIPTION OF THE DRAWINGS

The accompanying drawings, which are included to provide a further understanding of the disclosure are incorporated in and constitute a part of this application. The drawings together with the description serve to explain the principle of the invention. In the drawings:

FIG. 1 is an exemplary diagram of a cable broadcast network according to one embodiment of the invention;

FIG. 2 is a diagram illustrating exemplary protocols used to forward a request for diagnostic information and to receive the diagnostic information according to one embodiment of the present invention;

FIG. 3 is an exemplary table containing values associated with various diagnostic information according to one embodiment of the present invention;

FIG. 4 is a diagram of an exemplary syntax of a status diagnosis response protocol in case of receiving a single-stream (S-mode) in a diagnostic information transmitting method according to one embodiment of the present invention;

FIG. 5 is a diagram of an exemplary syntax of a status diagnosis response protocol in case a plurality of broadcast streams (M-mode) are multiplexed in a diagnostic information transmitting method according to one embodiment of the present invention;

FIG. 6 is a diagram of an example of OCAP_memory_status_report() object syntax according to one embodiment of the present invention;

FIG. 7 is a diagram of an example of Memory_status_report() object syntax according to one embodiment of the present invention;

FIG. 8 is a block diagram of an exemplary cable broadcast receiver according to one embodiment of the present invention; and

FIG. 9 is an exemplary flowchart of a method of transmitting memory status diagnostic information according to one embodiment of the present invention.

### DETAILED DESCRIPTION

Reference will now be made in detail to broadcast receivers, data structures and methods for providing diagnostic information according to the various embodiments, examples of which are illustrated in the accompanying drawings. Wherever possible, the same reference numbers will be used throughout the drawings to refer to the same or like parts for simplicity. In this case, OCAP (open cable application platform) is taken as an example of a data broadcasting platform in describing the various disclosed embodiments.

A cable broadcast receiver may be configured to communicate bi-directionally with a cable head end via a cable network infrastructure, as shown in FIG. 1, enabling data to be transferred bi-directionally. The cable broadcast receiver may download applications, for example, a monitor application such as an execution management application, an electronic program guide (EPG), an OCAP-Java application for a game application and the like, and data.

Services offered by the cable headend are continuously increasing. So, a host should be able to support the increasing services. For instance, the host may need to secure sufficient memory in order to support the increasing services to continuously operate at the host.

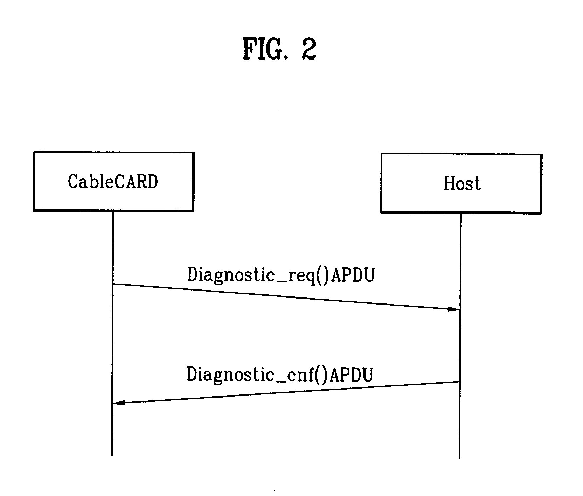

FIG. 2 is a diagram of exemplary protocols used to request and to receive diagnostic information of a host according to one embodiment of the present invention. In this embodiment, a cablecard receives from a cable headend or a user a request for diagnostic information of the host in which the cablecard may be inserted. Referring to FIG. 2, the cablecard may receive a request for diagnostic information of the host from a cable headend or user. The cablecard may forward the request to the host according to a predetermined protocol.

If the host receives the request for diagnostic information, the host collects diagnostic information in accordance with the request. The host may then forward the collected diagnostic information to the cablecard according to a predetermined protocol.

The predetermined protocol may be Generic Diagnostic Protocol, which is used in open cable, for example. The Generic Diagnostic Protocol is a protocol that may be used to monitor in real time various types of information associated with the host and devices connected to the host by a local entity (e.g., a user) or remote entity (e.g., a cable MSO). For example, by using this protocol, the cablecard may request for diagnostic information of the host using a diagnostic request protocol and the host may forward the diagnostic information to the cablecard using a diagnostic confirmation protocol.

Thus, in FIG. 2, if the protocol used between the cablecard and the host is Generic Diagnostic Protocol, then the diagnostic request protocol and the diagnostic response protocol may be represented by diagnostic_req() APDU (application protocol data unit) and diagnostic_cnf() APDU, respectively, for example. Thus, if the host collects and forwards its diagnostic information to the cablecard according to the diagnostic response protocol, then the cablecard may forward the received diagnostic information to the cable headend located in a remote place or may output it to a screen of the host through a cable menu interface implemented between the cablecard and the host. In this case, the cable menu interface may transmit a format of hypertext markup language (HTML) file or the like to the host, which causes a cable menu to be displayed on a screen, where the user may select a diagnostic item from the cable menu. In this case, the cable menu interface may generate a user interface that enables the user to request and to receive diagnostic information.

As mentioned above, the Generic Diagnostic Protocol is an example of one protocol that may be used. However, other protocols may be used to request and receive diagnostic information from the host. For example, a diagnostic information protocol defined by various broadcast specifications may be used. In fact, protocols that do not transport diagnostic information may be modified to transport such information. Thus, the Generic Diagnostic Protocol is one example of a protocol that may be used to transport diagnostic information.

A method enabling a host to effectively support various OCAP-based services that may be added or increased by a cable headend is now described. In order to assure that OCAP applications provided from the cable headend may be executed by the host, the host may determine a total memory size for the OCAP applications that it has to secure. This is because, other applications, such as applications native to the host (native application) may require a certain memory size and may compete for memory allocation along with the OCAP applications. For instance, if an arbitrary application occupies a considerable memory size at a specific time, other applications may unable to secure memory sufficient for optimal operation. Hence, the other applications may not operate efficiently or may not operate at all. Thus, the description below may describe the various schemes that a host having certain memory capacity may use to assure that the services provided by a cable headend may operate normally in the host.

### - First Embodiment -

The cable headend may prepare a full version of an OCAP Application for a host having sufficient memory capacity to drive all OCAP applications or data that are currently being serviced. For instance, a size of a memory allocated for OCAP application by the host may be arbitrarily defined or may correspond to a memory size agreed between the cable headend and a manufacturer of the host at a specific time.

The cable headend may also prepare a "light-weight" version of the OCAP Application for a host that may not have sufficient memory capacity to drive all OCAP applications or data that are currently being serviced. For instance, the host may not be able to secure sufficient memory to handle a current service of the cable headend based on an arbitrary memory size secured for OCAP applications by the host, or a memory size agreed between the cable headend and a manufacturer of the host.

The cable MSO may have an application database for storing the full version of the OCAP Application and a light-weight version of the OCAP Application.

The host is may be configured to forward diagnostic information including a memory size secured for OCAP applications by the host to the cablecard using, for example, the Generic Diagnostic Protocol. And, the cablecard may be configured to forward the received diagnostic information to the cable head end. After receiving the diagnostic information, the cable headend may be able to forward a suitable OCAP application to be downloaded by the host based on the received OCAP application secured memory size information of the host.

In one embodiment, the light-weight OCAP application may be produced by sacrificing qualities of various graphical images that may be generated. In another embodiment, the light-weight OCAP application may be produced by reducing a number of services available in the application.

In order to download a suitable OCAP application at the host, an application server of the cable MSO may need information on a total memory size secured for OCAP applications by the host and information on an available memory size secured by the host at a specific time prior to the application download. For this, in various embodiments, the Generic Diagnostic Protocol may be extended to include this information.

As may be described below, a host may forward information on a total memory size secured for OCAP application and information on an available memory size secured by the host at a specific time in which a cable headend, for example, made the request for that information. Here, the available memory size information may be the largest available continuous memory size information.

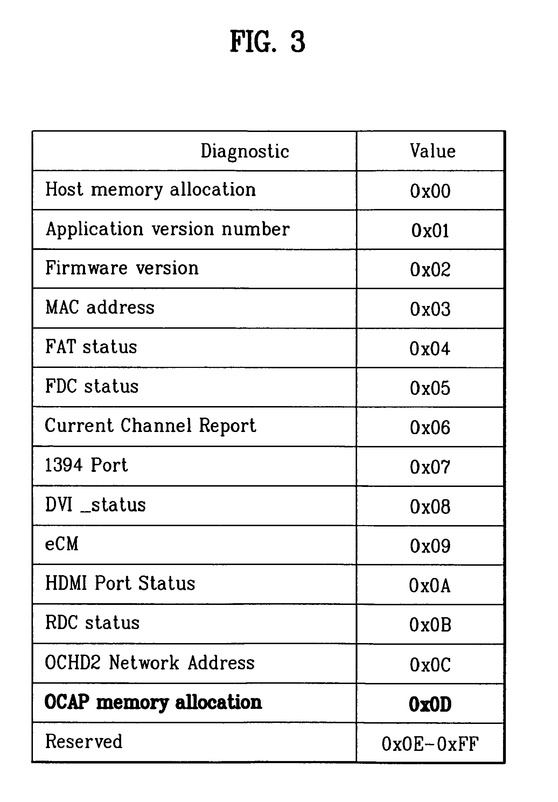

FIG. 3 is a diagram of an exemplary table that may contain various available diagnostic information and corresponding values according to one embodiment of the present invention. Referring to FIG. 3, the cablecard may make a request for diagnostic information by setting a diagnostic ID value to '0x0D.' This value indicates that OCAP application memory allocation diagnostic information is being requested. The ID value '0x0D' may be forwarded to the host using the diagnostic request protocol. When the host receives the ID value '0x0D', the host collects the requested OCAP application memory allocation diagnostic information. The collected diagnostic information may be forwarded to the cablecard using the diagnostic response protocol.

For instance, if the diagnostic ID value is '0x08', it means that the cablecard is making a request for DVI status information to the host. On the other hand, if the diagnostic ID value is '0x0A', the cablecard is requesting that the host to check a status of high definition multimedia interface (HDMI) port. In summary, a plurality of diagnostic IDs may be used to receive various information (eCM, RDS status, OCHD 2 Network Address) from the host.

An interface between a cablecard and a host can be classified as a single-stream cablecard interface or a multi-stream cablecard interface. In the single-stream cablecard interface, a cablecard may descramble a single broadcast stream and a host may process the single broadcast stream. In the multi-stream cablecard interface, a cablecard may descramble a plurality of multiplexed broadcast streams and a host may process a plurality of the broadcast streams.

Thus, a cablecard that descrambles a single-stream may be referred to as an 'S-mode' cablecard and a cablecard that descrambles multi-streams may be referred to as an 'M-mode' cablecard.

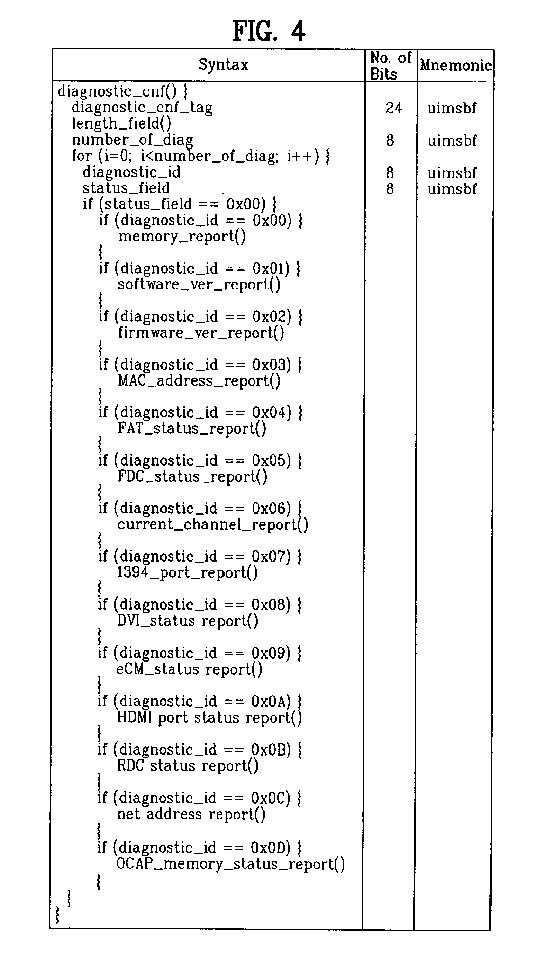

FIG. 4 is a diagram of an example of a syntax of a diagnosis response protocol for receiving a single-stream (S-mode) for forwarding diagnostic information according to one embodiment of the present invention.

If a cablecard sets a diagnostic ID value to '0x0D' and forwards a diagnostic request signal to a host, then the host receiving the diagnostic request signal may recognize that diagnostic information associated with memory allocated for OCAP application is being requested. The host may collect the requested diagnostic information and then forward the collected result to the cablecard in accordance with the diagnostic response protocol.

When the cablecard receives the diagnostic information, the cablecard may parse for a number of diagnostic contents (number_of_diag) included in the diagnostic information. The cablecard may parse OCAP_memory_status_report() object having the diagnostic ID value set to '0x0D'. The cablecard may then forward the parsed diagnostic information to the cable head end.

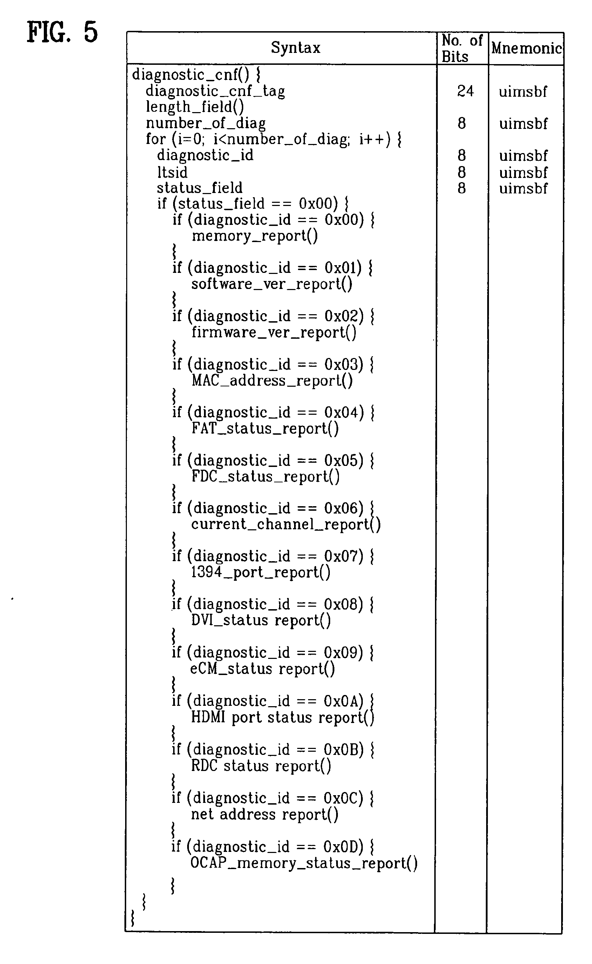

FIG. 5 is a diagram of an example of a syntax of a diagnosis response protocol, which a cable broadcast receiver may receive and multiplex a plurality of broadcast streams (M-mode) in diagnostic information according to one embodiment of the present invention.

A syntax shown in FIG. 5 may differ from the syntax shown in FIG. 4 in that there may be a value ID for each of a plurality of multiplexed streams. Thus, a cablecard may obtain status diagnostic information of a memory in a manner of receiving status diagnostic information of a memory collected by a host and parsing OCAP_memory_status_report() having a diagnostic ID set to '0×0D'.

Diagnostic information according to one embodiment of the present invention may includes size information of total OCAP memories allocated for OCAP application such as a downloadable application, data and the like, size information of an available OCAP memory, size information of a largest available continuous OCAP memory in the available OCAP memory, etc.

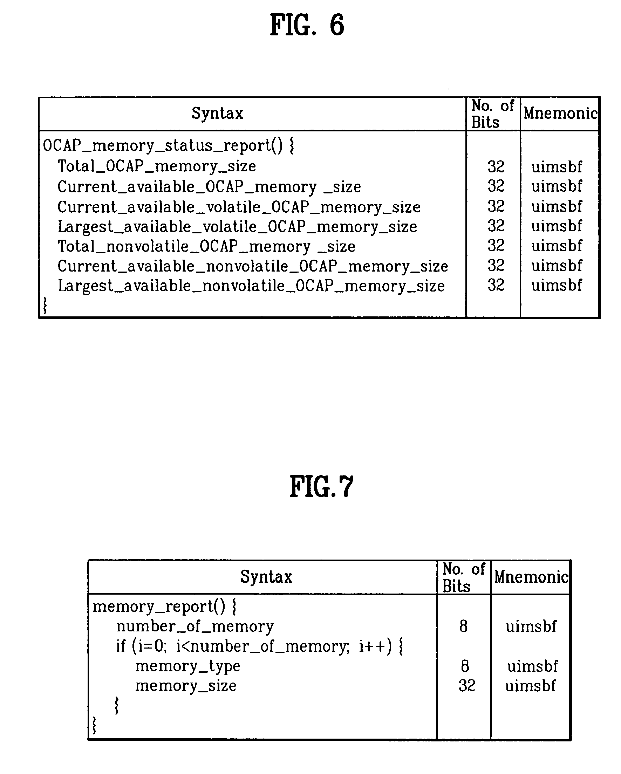

FIG. 6 is a diagram of an example of OCAP_memory_status_report() object syntax included in the exemplary syntax shown in FIG. 4 or FIG. 5 according to one embodiment of the present invention. An example of syntax for a cablecard to parse a diagnostic response protocol in a diagnostic information transmitting method according to one embodiment of the present invention is explained with reference to FIG. 6 as follows.

A host may forward the collected diagnostic information according to a diagnostic ID value set to '0x0D' to the cablecard using a diagnostic response protocol. The cablecard may obtain the diagnostic information by parsing OCAP_memory_status_report() shown as an example of FIG. 6, which may be included in the diagnostic information. Thus, if the cablecard transmits 'OCAP memory allocation diagnostic id' by including it in diagnostic_req() APDU, a host may forward OCAP_memory_status_report() to the cablecard by including it in diagnostic_cnf() APDU.

Object syntax of the OCAP_memory_status_report() included in the diagnostic_cnf() APDU from the host may be as follows. In this example, a memory size secured for an OCAP-based service by the host may include volatile memory and non-volatile memory.

'Total_volatile_OCAP_memory_size' may represent a total size of volatile memory secured by a host for an OCAP application, which is to be separated from a memory area of a native application for the prevention of mutual intrusion. In this case, a unit of the memory size is defined as kilo-byte corresponding to 1,024 bytes.

'Current_available_volatile_OCAP_memory_size' may represent a size of available volatile memory currently secured by the host from among the total size of the volatile memory secured by the host with reference to a timing point of transmitting the 'OCAP memory allocation diagnostic id' from the cablecard to the host by including it in the diagnostic_req() APDU as a diagnostic request protocol. In other words, a size resulting from subtracting a used OCAP volatile memory from the total OCAP volatile memory.

'Largest_available_volatile_OCAP_memory_size' may represent a size of largest available continuous OCAP volatile memory secured by the host with reference to a timing point of transmitting 'OCAP memory allocation diagnostic id' from the cablecard to the host by including it in the diagnostic_req() APDU as a diagnostic request protocol.

'Total_non-volatile_OCAP_memory_size' may represent a total size of non-volatile memory secured by the host for OCAP application. And, its unit is represented as kilo-byte defined as 1,024 bytes.

'Current_available_non-volatile_OCAP_memory_size' represents a size of available OCAP non-volatile memory secured by the host with reference to a timing point of transmitting 'OCAP memory allocation diagnostic id' from the cablecard to the host by including it in the diagnostic_req() APDU as a diagnostic request protocol. This means a size resulting from subtracting used OCAP non-volatile memory from the total OCAP non-volatile memory.

'Largest_available_non-volatile_OCAP_memory_size' represents a size of largest available continuous OCAP non-volatile memory secured by the host with reference to a timing point of transmitting 'OCAP memory allocation diagnostic id' from the cablecard to the host by including it in the diagnostic_req() APDU as a diagnostic request protocol. In other words, a largest available continuous memory size by considering memory fragmentation.

The respective status diagnostic informations of the memory and the values for the status diagnostic information are exemplary and may be easily modified by those skilled in the art.

As mentioned in the foregoing description, a status of memory allocated to OCAP application may be defined. The cable headend may use the received defined status diagnostic information according to a predetermined specification by having the information transmitted and received between the host and the cablecard and by transmitting the corresponding information to the cable headend from the cablecard. Where the host does not require a cablecard, the host directly bi-directionally communicate with the cable headend.

In various embodiments, the host can use a host diagnostic protocol associated with the aforesaid Generic Diagnostic Protocol.

The host may diagnose status information of its memory using the host diagnostic protocol and display it to a user. If so, the user may recognize memory status of the host via a screen. The user may select a service downloadable to the host by comparing it to a size of a service provided by the cable head end. In the corresponding communications between the host and the cable head end, the host obtains the service according to the user's selection to the cable headend using the Generic Diagnostic Protocol, Internet protocol or the like.

Moreover, the above-explained status diagnostic function may be applicable to a satellite broadcast receiver, a terrestrial broadcast receiver, IPTV and the like.

In case of the satellite broadcast receiver, the cablecard is replaced by a smart card. In this case, an interface module for external interfacing like the cablecard can be provided externally or internally.

### - Second Embodiment -

A second embodiment of the present invention relates to a scheme of transmitting total memory size information for OCAP application via a Generic Diagnostic Protocol. This scheme may be useful in case of selecting a scheme of transmitting a total service with a single code image at one time and replacing a previously used code image by the single code image.

FIG. 7 is a diagram of an example of Memory_status_report() object syntax according to one embodiment of the present invention. Referring to FIG. 7, Memory_status_report() object syntax may include 'number_of_memory', 'memory_type' and 'memory_size'.

The 'number_of_memory' indicates a number of memory types. The 'memory_type' indicates a type of memory. And, a value of the memory type may be defined as shown in Table 1.

**[Table 1]**

| | Memory Type |
|---|---|
| 0x00 | ROM |
| 0x01 | DRAM |
| 0x02 | SRAM |
| 0x03 | Flash |
| 0x04 | NVM |
| 0x05 | Hard drive |
| 0x06 | Video memory |
| 0x07 | Other memory |
| 0x08 | OCAP DRAM |
| 0x09 | OCAP SRAM |
| 0x0A | OCAP Flash |
| 0x0B | OCAP NVM |
| 0x0C | OCAP Hard drive |
| 0x0D ~ 0xFF | reserved(unused) |

The 'memory_size' may indicate a physical size of a specific memory type according to a value of the memory type. And, a unit of the 'memory_size' may be defined as kilo-byte corresponding to 1,024 bytes. Referring to Table 1, '0x08-0x0C' may define a memory of a host secured for each OCAP. This may be transmitted to a cablecard from the host. And, the cablecard may transmit it to a cable head end. In this case, the transmission between the cablecard and the cable headend may be achieved using the Generic Diagnostic Protocol.

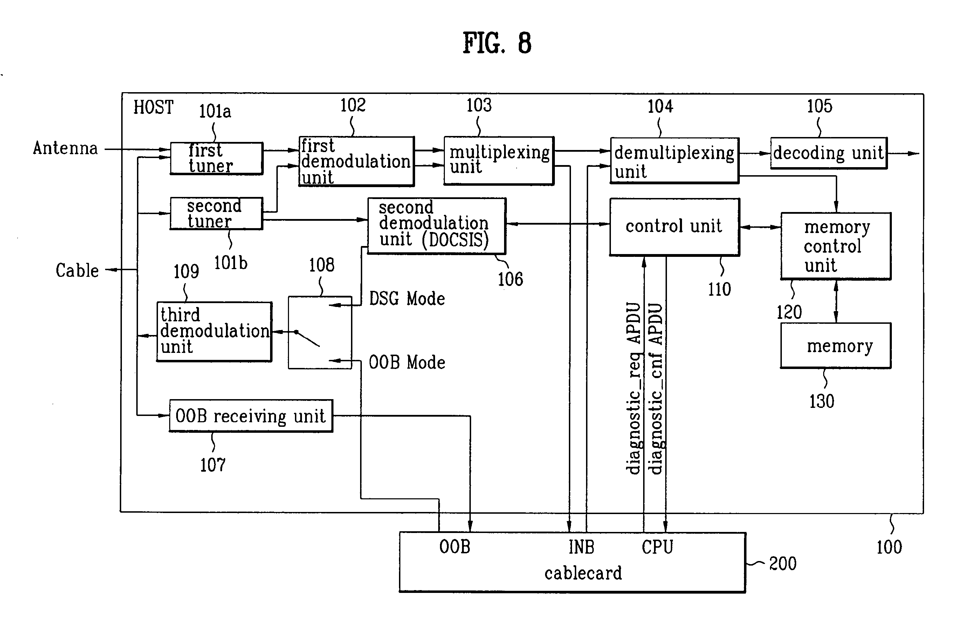

FIG. 8 is a block diagram of an exemplary cable broadcast receiver according to one embodiment of the present invention. An operation of the cable broadcast receiver with reference to FIG. 8 is now described.

Referring to FIG. 8, the cable broadcast receiver 100 may include a cablecard, which may be separately insertable into a slot located at the broadcast receiver 100. In an alternative embodiment, the broadcast receiver may include a built-in module that has a functional equivalent of a cablecard. In this instance, the broadcast receiver does not require a separate cablecard. In general, the broadcast receiver may be capable of receiving a cable broadcast signal only or at least one of broadcast signals of cable broadcasting, terrestrial broadcasting and satellite broadcasting.

Meanwhile, a bi-directional communication system between a cable broadcast receiver and a broadcasting station may be classified into two types. For an uplink service within an open cable, Out-of-Band (OOB) mode or DOCSIS Settop Gateway (DSG) mode may be available. A viewer may select to view a specific program via a host using one of the two modes. A user may directly participate in a broadcast program or select to view necessary information. And, a data broadcast service may be offered via the OOB or DSG mode.

The OOB mode is a reference that may regulate a transmission specification between a cable broadcasting station (headend) and an inter-sec equipment within a settop box, cablecard or broadcast receiver. On the other hand, the DSG mode may indicate a transmission mode between a cable modem control system of a cable broadcasting station and a DOCSIS based cable modem within a settop box, cablecard or broadcast receiver. In this case, the DOCSIS may transmit data using a cable modem.

In this embodiment, a cable broadcast receiver employing hybrid OOB-and-DSG mode may be represented. The cable broadcast receiver 100, as shown in FIG. 8, may include a first tuner 101a, a second tuner 101b, a first demodulation unit 102, a multiplexing unit 103, a demultiplexing unit 104, a decoding unit 105, a second demodulation unit (DOCSIS) 106, an OOB receiving unit 107, a switching unit 108, a third demodulation unit 109, a control unit 110, a memory control unit 120 and a memory 130.

The first tuner 101a may tune to a specific channel frequency of a terrestrial audio/video (A/V) broadcast transmitted via an antenna or a cable A/V broadcast transmitted by in-band via a cable and may output it to the first demodulation unit 102.

Terrestrial broadcasting may differ from cable broadcasting. Yet, the first demodulation unit 102 may be capable of performing different demodulations on signals of different modulation schemes, respectively. If a terrestrial A/V broadcast is modulated by vestigial sideband modulation (VSB) to be transmitted and if a cable A/V broadcast is modulated by quadrature amplitude modulation (QAM) to be transmitted, the first demodulation unit 102 may perform a demodulation of a signal by VSB or QAM according to the signal selected by the first tuner 101a.

The signals demodulated by the first demodulation unit 102 may be multiplexed by the demultiplexing unit 103 to output the cable broadcast to the cablecard 200 and the terrestrial broadcast to the demultiplexing unit 104.

In this embodiment shown in FIG. 8, the cablecard 200 may be capable of processing multi-streams. Hence, the cablecard 200 may enable a user to view an input broadcast having at least two streams multiplexed via the cable broadcast receiver 100.

The demultiplexing unit 104 may receive the multiplexed broadcast signal and then demultiplexe the received broadcast signal into a plurality of streams to output. The decoding unit 105 may receive to decode the broadcast signal demultiplexed by the demultiplexing unit 104. If so, a video/audio signal viewable by a user may be output.

The second tuber 101b may tune a specific channel frequency of data broadcasts transmitted via a cable in DSG mode and then output it to the second demodulation unit 106. The second demodulation unit 106 may demodulate the DSG-mode data broadcast and then output the demodulated broadcast signal to the control unit 110. The third tuner 107 may tune a specific channel frequency for downlink data broadcasts transmitted in OOB mode via a cable and then output it to the cablecard 200.

If bi-directional communication between the cable broadcasting station and the cable broadcast receiver is possible, uplink informations (e.g., pay-program request, diagnostic information of host, etc.) transmitted from the cable broadcast receiver to the cable broadcasting station may be transmitted in OOB or DSG mode. Hence, the cable broadcast receiver according to one embodiment of the present invention may include the switching unit 108 for selecting one of the modes to transmit information.

In the OOB mode, user information or system diagnostic information may be output to the third modulation unit 109 via the cablecard 200 and the switching unit 108. The third demodulation unit 109 may modulate the output signal by quadrature phase shift keying (QPSK) modulation or the like and then transmit the modulated signal to the cable broadcasting station via the cable. If user's broadcast information is transmitted in DSG mode, the information may be output to the control unit 110 and the modulation unit 109 via the switching unit 108 and then may be modulated by the modulation unit 109 according to QAM -16. The modulated signal may be transmitted to the cable broadcasting station via the cable.

In case of receiving a memory status diagnostic request from the control unit 110, the memory control unit 120 may collect diagnostic information of the memory and then transmit the collected information to the control unit 110. The control unit 110 may then transmit the collected memory diagnostic information to the cablecard 200.

In this embodiment shown in FIG. 8, if a received broadcast corresponds to a terrestrial broadcast, the cablecard 200 may receive a multi-stream broadcast signal from the multiplexing unit 103. If the broadcast signal is scrambled, the cablecard 200 may descramble the scrambled broadcast signal to enable the corresponding cable broadcast to be normally viewed.

The cablecard 200 may be able to make a request for a status diagnosis of the cable broadcast receiver 100 to the control unit 110 using a status diagnostic request protocol for a host status. The control unit 110 may transmit the status diagnostic information to the memory control unit 120 and then may collect memory status diagnostic information.

The control unit 110 may receive the collected memory status diagnostic information from the memory control unit 120 and may then transmit the received memory status diagnostic information to the cablecard according to a diagnostic response protocol. In FIG. 8, an example of the status diagnostic request protocol is represented as 'diagnostic_req APDU' and an example of the status diagnostic response protocol is represented as 'diagnostic_cnf APDU'.

The cable broadcast receiver 100 may create to transmit status diagnostic information of the memory 130 to the cablecard 200. If so, the cablecard 200 may transmit the status diagnostic information to the cable headend via the cable network. The cable headend may then be able to recognize the status of the memory 130 of each cable broadcast receiver.

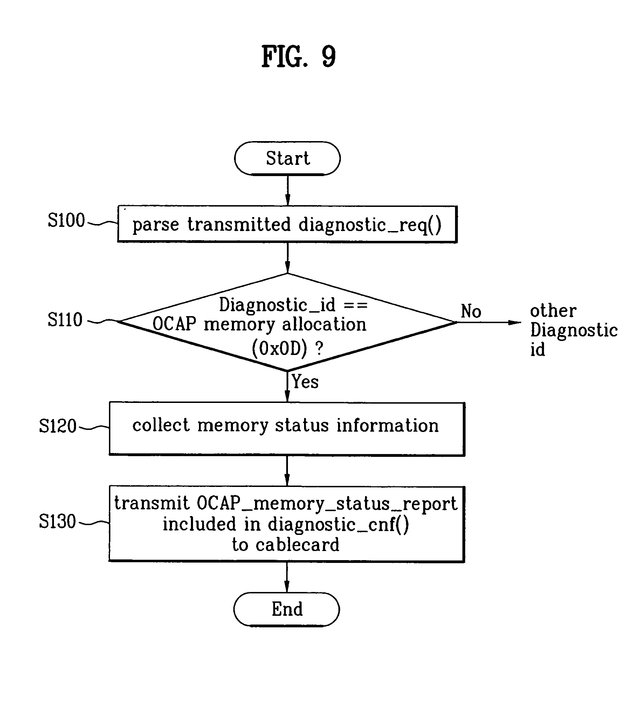

FIG. 9 is an exemplary flowchart of a method of transmitting memory status diagnostic information according to one embodiment of the present invention. Referring to FIG. 9, at step S100, a request for status diagnostic information is received. In case of using the Generic Diagnostic Protocol, the status diagnostic request is transmitted may be 'diagnostic_req() APDU'. The received status diagnostic request is parsed for a value identifying the requested diagnostic information.

Then at step S110, a determination is made whether diagnostic information associated with memory allocation for OCAP application is being requested. If diagnostic information associated with memory allocation for OCAP application is not being requested, the process continues to identify other diagnostic information.

If the value of a diagnostic id field of the parsed protocol includes the status diagnostic information of the memory allocated for OCAP application, the diagnostic information is collected at step S120. Then at step S130, The collected diagnostic information associated with memory allocated for OCAP application is forwarded to a source requesting the information.

Accordingly, the following advantages may be obtained.

The memory status diagnostic information associated with each host can be obtained by the cable head end.

If the mode regulated by such a predetermined protocol as the Generic Diagnostic Protocol is extended, compatibility for the transmission information with the cablecard can be secured in the diagnostic information transmitting method.

The present disclosure has been described using digital broadcast receivers in which the broadcast receivers may have terrestrial analog/digital channels, and cable analog/digital channels. With modifications known to those skilled in the art, the present disclosure can be implemented in any terrestrial wired (e.g., telephone) and wireless (e.g., cellular) networks and satellite networks.

It will be appreciated that, in various of the above-disclosed and other features and functions, or alternatives thereof, they may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow processes, data structures, protocols, or tables can be implemented as a self-consistent sequence of computerized steps that lead to a desired result. These steps can be defined by and/or in one or more computer instructions stored in a computer-readable medium, or can be encompassed using a signal, or provided as software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that various of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A host comprising:
a host controller configured to receive a request external to the host, wherein the request is for diagnostic information associated with memory allocated for an application; and
the host controller further configured to collect the requested diagnostic information.

2. The host of claim 1, wherein the host controller is configured to receive the external request through a communication interface.

3. The host of claim 2, wherein the communication interface includes a cablecard.

4. The host of claim 3, wherein the host is configured to communicate with the cablecard using Generic Diagnostic Protocol.

5. The host of claim 1, wherein the requested diagnostic information includes information that identifies at least one of total memory allocated for the application, available memory of the host, and largest available continuous memory of the host.

6. The host of claim 5, wherein the available memory is an available memory at the time the host controller receives the requested diagnostic information.

7. The host of claim 1, wherein the application includes an Open Cable Application Platform (OCAP) application.

8. A communication device configured to communicate with a host, the communication device comprising:
a controller configured to receive a request external to the communication device, wherein the request is for diagnostic information associated with memory allocated for an application;
the controller configured to set a value corresponding to the requested diagnostic information; and
the controller further configured to request the diagnostic information from the host using the set value.

9. The communication device of claim 8, wherein the controller is configured to receive the requested diagnostic information from the host, and
the communication device is further configured to parse the requested diagnostic information in accordance with a predetermined protocol.

10. The communication device of claim 9, wherein the controller is configured to forward the parsed diagnostic information to a source requesting the diagnostic information.

11. The communication of claim 8, wherein the application includes an Open Cable Application Platform (OCAP) application.

12. A method comprising the steps of:
receiving a request external to a host, wherein the request is for diagnostic information associated with memory allocated for an application;
collecting the requested diagnostic information in accordance with the request; and
forwarding the collected diagnostic information.

13. The method of claim 12 further comprising the step of receiving a version of the application at the host appropriate to the memory allocated for the application.

14. The method of claim 12 further comprising the steps of:
parsing the request for a value; and
determining, based on the value, whether the request is for the diagnostic information associated with the memory allocated for an application.

15. A method comprising the steps of:
requesting diagnostic information associated with memory allocated for an application;
receiving the diagnostic information in accordance with the request; and
performing at least one of forwarding the diagnostic information and causing the diagnostic information to be displayed.

16. The method of 15 further comprising the step of parsing the requested diagnostic information in accordance with a predetermined protocol.

17. The method of claim 16 further comprising the step of forwarding the parsed diagnostic information to a source requesting the diagnostic information.

18. The method of claim 15 further comprising the step of collecting the requested diagnostic information.

19. The method of claim 15 further comprising the step of receiving a version the application appropriate to the memory allocated for the application.

20. A data structure comprising:
information defining a size of memory allocated for an application; and
information defining a size of available memory.

21. The data structure of claim 20, further comprising information that defines a size of the largest available continuous memory.
